# EUROPEAN PATENT APPLICATION

(11) **EP 1 932 434 A1**
(43) Date of publication of application: **18.06.2008**
(21) Application number: 06797505.2
(22) Date of filing: 06.09.2006
(51) Int. Cl.: A23L 1/0528

(54) **PROCESS FOR PRODUCING KONJAC PRODUCT**

(30) Priority: 07.09.2005 JP 2005259052
(71) Applicant: Chojusystem, Co., Taito-ku Tokyo 110-0015 (JP); Hurusatoryougami, Co., Ogano-machi Chichibu-gun Saitama 368-0105 (JP)
(72) Inventor: SHIRAISHI, Shujiroh, Tokyo 110-0015 (JP); KOSUGE, Eiichi, Chichibu-gun, Saitama 368-0105 (JP)
(74) Representative: Lamb, Martin John Carstairs
(86) International application number: PCT/JP2006/317609
(87) International publication number: WO 2007/029721

(57) **Abstract**

In order to prodcue a konjac product without unpleasanrt smell, the method includes: a mixing process (5), wherein a specified amount of water or processed water and soymilk prepared from soybean flour of from 1 µm to 50 µm in size are added to konjac flour and mixed by agitation then allowed to stand for a specified amount of time; a kneading process (8), which comes after the mixing process, wherein a specified amount of coagulant agent is added to the mixture followed by kneading (8); and a shaping process (9), which comes after the kneading process, wherein the resulting kneaded mixture is heated and molded into a desired shape.

## Description

### FIELD OF THE INVENTION

The present invention relates to producing method of konjac product such as sashimi konjac, plate konjac, konjac pasta, and konjac ramen noodle.

### DESCRIPTION OF THE RELATED ART

A conventional a producing method of konjac is designed to consist of the following processes: a coagulant-aided shaping process, wherein a specified amount of cold water is put in a container, and then a specified amount of coagulant agent, such as monovalent cation sodium, monovalent cation potassium or divalent calcium is put in the cold water to be mixed with it to make a coagulant agent; a konjac material mixing process, wherein the coagulant agent, which is made in the coagulant-aided shaping process, is agitated gently, while a specified amount of konjac refined flour or konjac material such as heat-processed konjac potato is added to the coagulant agent one by one to make a mixture; a heating process, which comes after the konjac material mixing process, wherein the mixture is agitated for a specified amount of time to raise its temperature to between 50 °C and 60 °C; a standing process, wherein the resulting heat-processed mixture is let stand until it becomes gel state enough; a cutting-off process, which comes after the standing process, wherein the resulting gelled mixture is cut off in blocks; a boiling process, which comes after the cutting-off process, wherein the resulting cut-off gelled mixture is boiled for a specified amount of time; and a reserving process, which comes after the boiling process, wherein the resulting boiled mixture is put in a cold water reservoir for reservation.

The above-mentioned producing method of konjac has a drawback that it only produces konjac containing similar ingredients to those of conventional one, providing no nutritional value.
Patent document: Japanese published unexamined application H5-236887

### DISCLOSURE OF THE INVENTION

### PROBLEMS TO BE SOLVED BY THE INVENTION

The present invention, in view of the above-mentioned conventional drawback, purposes to provide a producing method of konjac product, which is free from the smell characteristic to konjac, contains isoflavone, lecithin, saponin, vitamins B1 and B2 and so on and can be taken as a health food.

The above-mentioned and other purposes as well as novelty features of the present invention are further clarified by reading the explanations described below while referring to attached drawings. However, the drawings are solely for description purpose. They are not intended to limit technical scope of the present invention.

### MEANS OF SOLVING THE PROBLEMS

In order to accomplish the above-mentioned purpose, in the present invention the konjac producing method is comprised of the following processes: a mixing process, wherein a specified amount of water or processed water and soymilk prepared from soybean flour of from 1 µm to 50 µm in size are added to konjac flour and mixed by agitation then allowed to stand for a specified amount of time; a kneading process, which comes after the mixing process, wherein a specified amount of coagulant agent is added to the mixture followed by kneading; and a shaping process, which comes after the kneading process, wherein the resulting kneaded mixture is heated and molded into a desired shape.

In the present invention the konjac producing method is comprised of the following processes: a mixing process, wherein a specified amount of water or processed water and soymilk prepared from soybean flour of from 1 µm to 50 µm in size and rice flour are added to konjac flour and mixed by agitation then allowed to stand for a specified amount of time; a kneading process, which comes after the mixing process, wherein a specified amount of coagulant agent is added to the mixture followed by kneading; and a shaping process, which comes after the kneading process, wherein the resulting kneaded mixture is heated and molded into a desired shape.

### ADVANTAGEOUS EFFECT OF THE INVENTION

As is clear from the above-mentioned explanations, the present invention provides the affects enumerated below.

(1) The present invention comprises: a mixing process, wherein a specified amount of water or processed water and soymilk prepared from soybean flour of from 1 µm to 50 µm in size are added to konjac flour and mixed by agitation then allowed to stand for a specified amount of time; a kneading process, which comes after the mixing process, wherein a specified amount of coagulant agent is added to the mixture followed by kneading; and a shaping process, which comes after the kneading process, wherein the resulting kneaded mixture is heated and molded into a desired shape. Therefore it can make a konjac product which is free from the smell characteristic to konjac, easy to eat, and contains soybean ingredients such as isoflavone, lecithin, saponin, vitamins B1 and B2 and can be taken as a health food.

(2) It is easy to produce by the above (2).

(3) Claim 2 provides similar effects to those of the above (1) and (2). Also, mixing with rice flour will diminish conventional-konjac-like strong elasticity and provide noodle-like texture. Therefore, it can be used for various kinds of health foods.

(4) Claim 3 provides similar effects to those in the above (1), (2) and (3), and makes mixing in the mixing process efficient.

(5) Claim 5 provides similar effects to those in the above (1), (2) and (3), and makes the konjac product free from the smell characteristic to konjac, and also easy to eat because of the cut-off sizes.

### BRIEF DESCRIPTION OF THE DRAWINGS

Fig. 1 is a process chart showing the first preferred embodiment to practice the present invention.

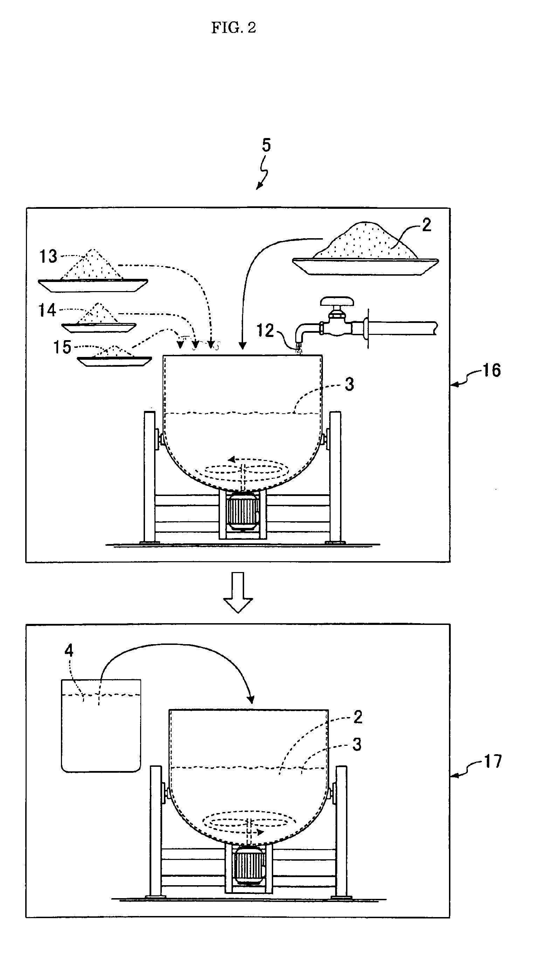

Fig. 2 is an explanatory diagram of the mixing process of the first preferred embodiment to practice the present invention.

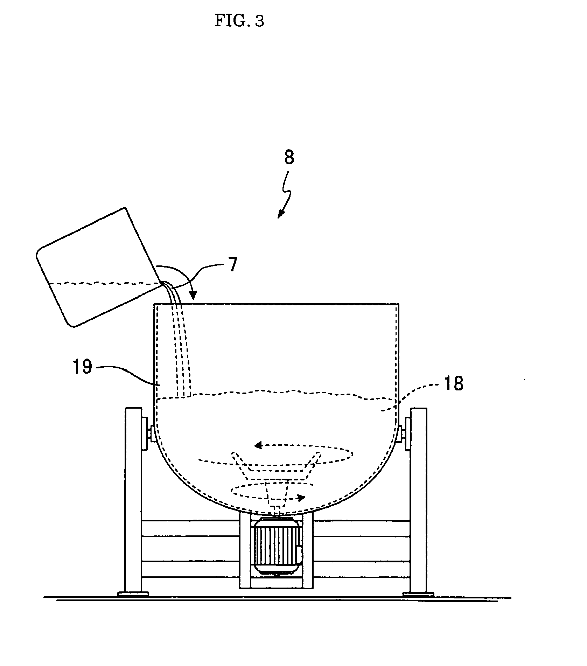

Fig. 3 is an explanatory diagram of the kneading process of the first preferred embodiment to practice the present invention.
Fig. 4 is an explanatory diagram of the shaping process of the first preferred embodiment to practice the present invention.
Fig. 5 is a process chart showing the second embodiment to practice the present invention.

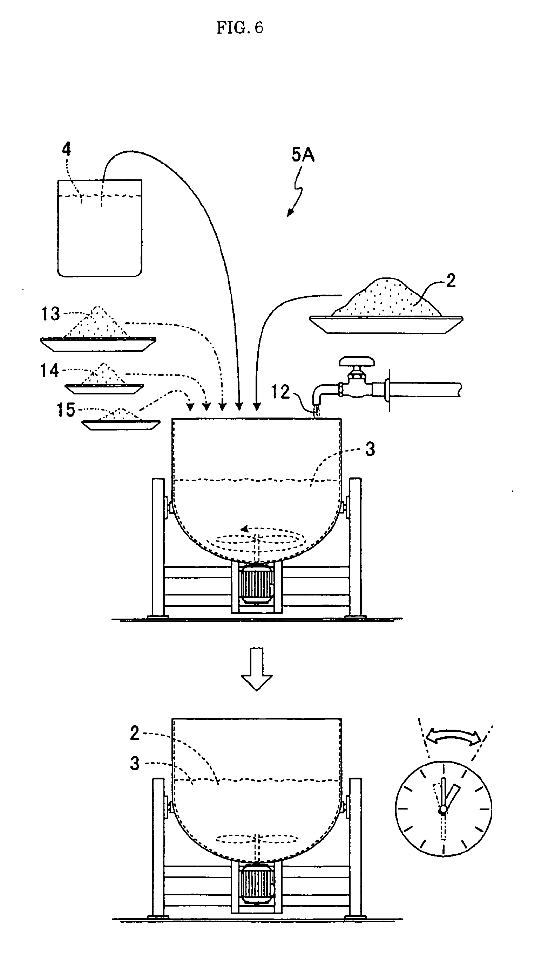

Fig. 6 is an explanatory diagram of the mixing process of the second embodiment to practice the present invention.
Fig. 7 is an explanatory diagram of the shaping process of the second embodiment to practice the present invention.
Fig. 8 is a process chart showing the third embodiment to practice the present invention.

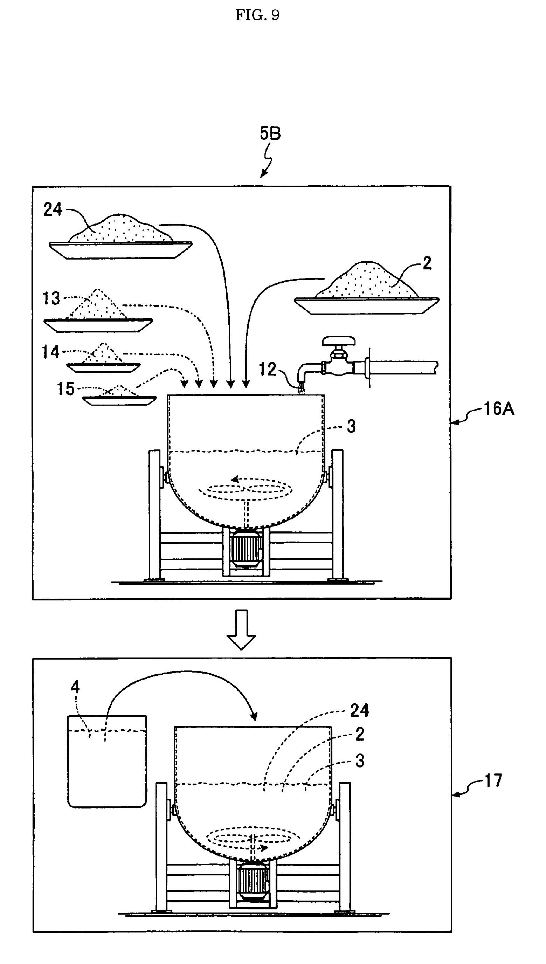

Fig. 9 is an explanatory diagram of the mixing process of the third embodiment to practice the present invention.
Fig. 10 is an explanatory diagram of the shaping process of the third embodiment to practice the present invention.
Fig. 11 is a process chart showing the fourth embodiment to practice the present invention.

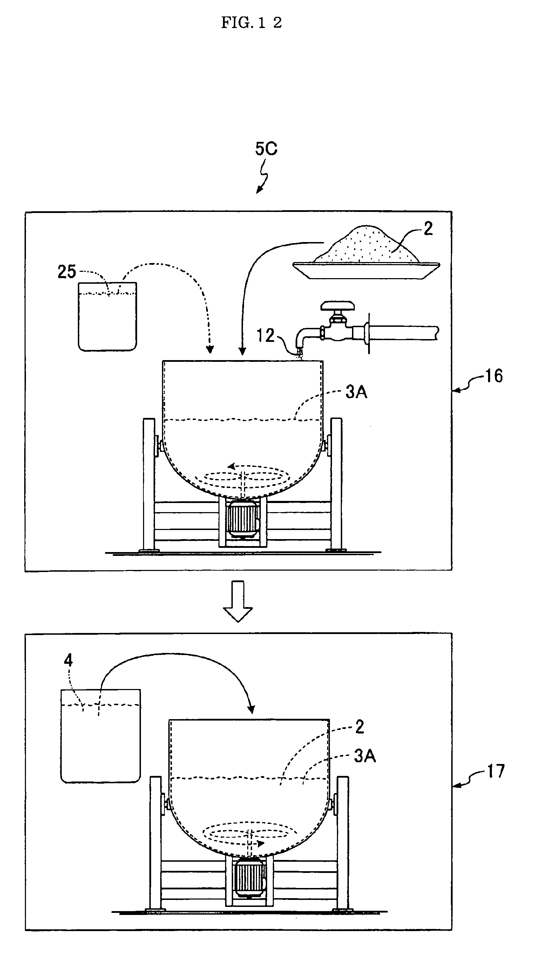

Fig. 12 is an explanatory diagram of the mixing process of the fourth embodiment to practice the present invention.
Fig. 13 is an explanatory diagram of the shaping process of the fourth embodiment to practice the present invention.

### DESCRIPTION OF THE NUMERALS

1, 1A, 1B and 1C: producing method of konjac product
2: konjac flour
3 and 3A: water
4: soymilk
5, 5A, 5B and 5C: mixing process
6: mixture
7: coagulant agent
8 and 8A: kneading process
9: shaping process
10: konjac product
11: packing process
12: drinking water
13: chitosan
14: amino acids
15: pigment carotene
16 and 16A: swelling process
17: mixing and standing process
18: konjac ingredient
19: kneading machine
20: gelled material
21: heating process
22: mold
23: shape-processing process
24: rice flour
25: mineral liquid

### DESCRIPTION OF PREFERRED EMBODIMENTS

Hereinafter, the present invention is explained in detail by referring to the preferred embodiments to practice the present invention as illustrated in the drawings.

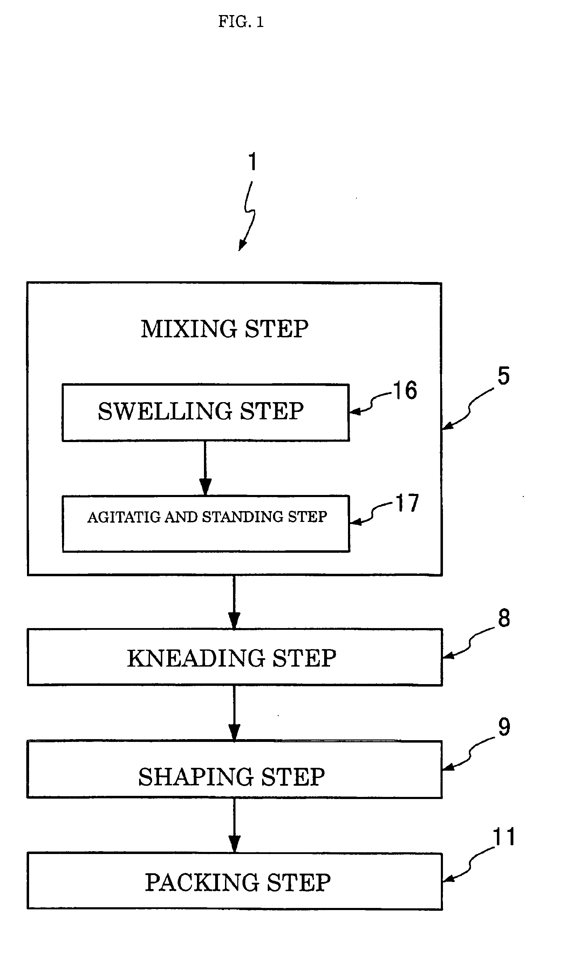

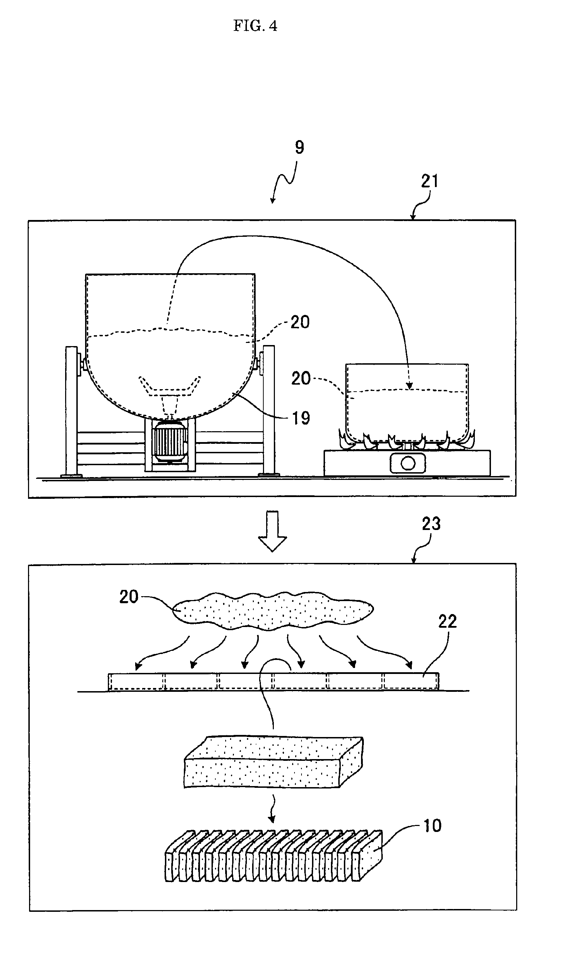

In the first preferred embodiment to practice the present invention, as illustrated in Fig. 1 and Fig. 4, 1 is a producing method of konjac product according to the present invention.
The "producing method of konjac product" 1 comprises: a mixing process 5, wherein a specified amount of water 3 and soymilk 4 prepared from soybean flour of from 1 µm to 50 µm in size are added to milled konjac flour 2 and mixed by agitation then allowed to stand for a specified amount of time; a kneading process 8, which comes after the mixing process 5, wherein a specified amount of coagulant agent 7 is added to the mixture 6 followed by kneading; a shaping process 9, which comes after the kneading process 8, wherein the resulting kneaded mixture is heated and molded into a desired shape; and a packing process 11 wherein the konjac product 10, made in the shaping process 9, is packaged.

The mixing process 5 comprises: a swelling process 16, wherein the processed water 3 is prepared by mixing drinking water 12, chitosan 13 of between 0.0027 and 0.027 weight percent, amino acids 14 of between 0.002 and 0.004 weight percent, and pigment carotene 15 of 0.00067 and 0.004 weight percent, then the processed water 3 is added with konjac flour 2 of between 0.037 and 0.055 weight percent, followed by mixing, and further followed by standing for a specified amount of time until the konjac flour 2 swells enough; and a mixing and standing process 17, which comes after the swelling process 16, wherein the processed water 3 is added with soymilk 4 of between 0.014 and 0.054 weigh percent, followed by mixing by agitation, and further followed by standing for a specified amount of time.

In the kneading process 8, konjac ingredient 18 prepared in the mixing process 5 is mixed with the coagulant agent 7 such as potassium or calcium hydroxide of between 0.002 and 0.005 weight percent, followed by kneading by a kneading machine to make a gel state.

The shaping process 8 comprises: a heating process 21 wherein, the gelled material 20, which is gelled in the kneading process, is heat-sterilized to bring it to temperature of between 70°C and 90°C; and a shape-processing process 23, which follows the heating process 21, wherein the heat-processed material is put in a mold 22 to be shape-processed into a desired shape such as plate konjac or konjac pasta, or the shape-processed material is cut-processed into a desired shape such as sashimi konjac to be processed into konjac product 10.

The konjac product 10, produced by the above-mentioned method, contains the soymilk 4, therefore it can be taken as a health food containing isoflavone, lecithin, saponin, vitamins B₁ and B₂ of soybean, while the amino acids, contained in the processed water to be used, make it free from the smell characteristic to konjac, so that the konjac product 10 becomes easy to eat.

### DESCRIPTION OF OTHER PREFERRED EMBODIMENTS

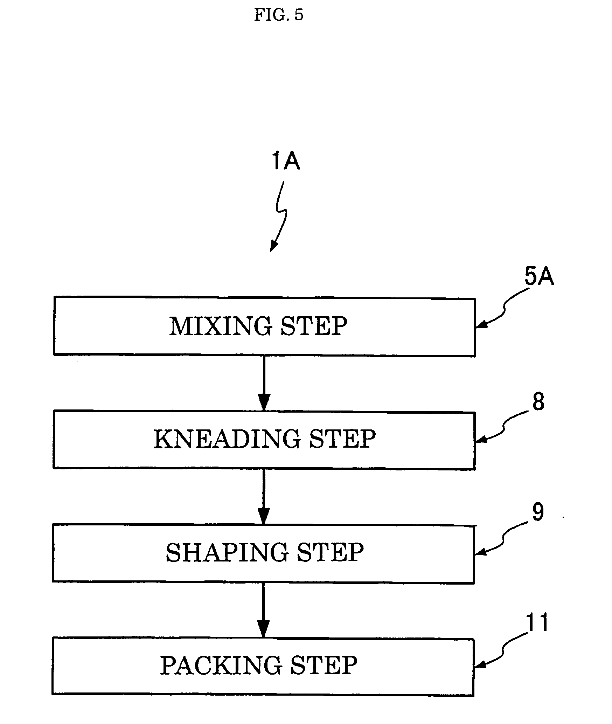

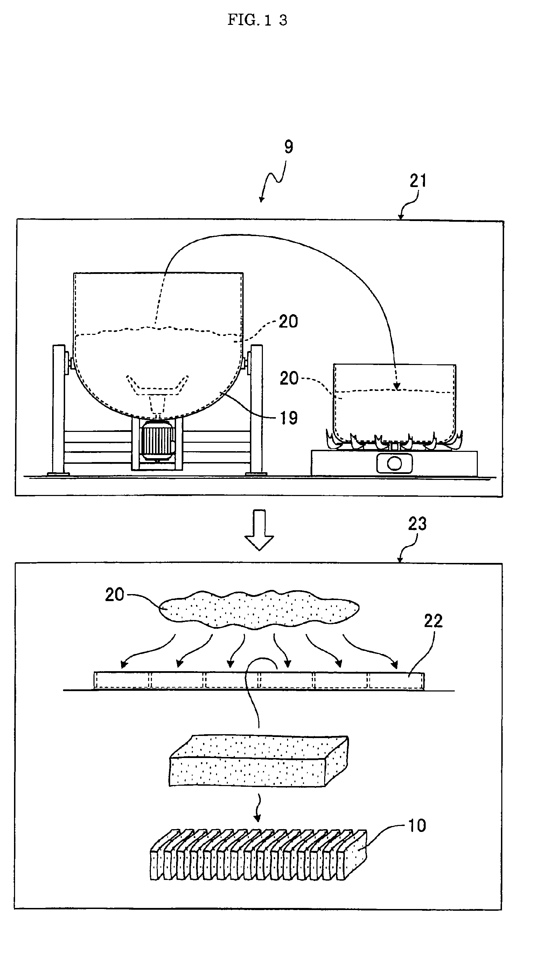

Explained next is about other embodiments to practice the present invention as illustrated in Fig. 5 and Fig. 13. In explaining these other embodiments to practice the present invention, in order to avoid overlapping explanations, the same numerals are applied to the same compositions as in the above-mentioned the first preferred embodiment to practice the present invention.

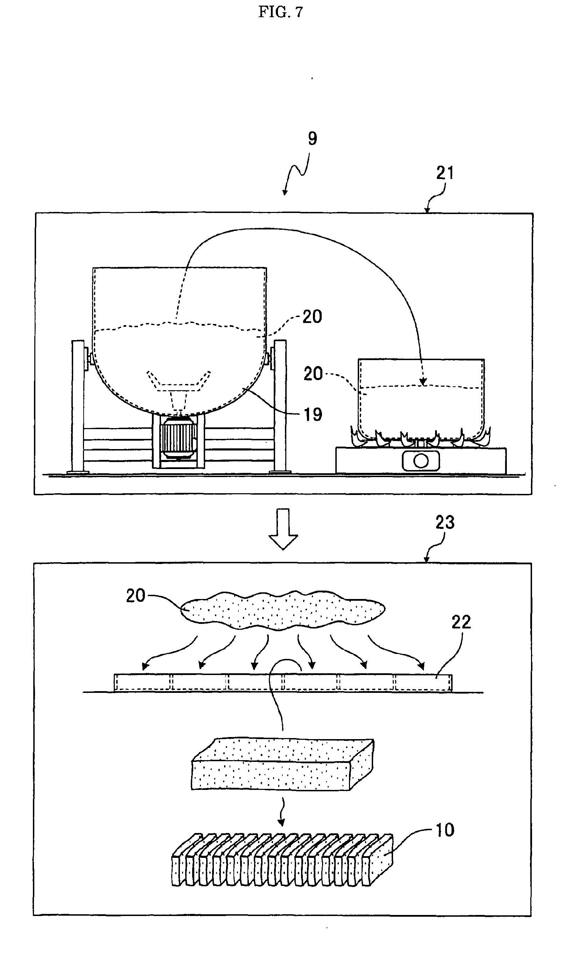

In the second embodiment to practice the present invention as illustrated in Fig. 5 and Fig. 7, a principal difference from the above-mentioned the first preferred embodiment to practice the present invention is that a mixing process 5A is practiced, wherein the processed water 3 is added with the konjac flour 2 and the soymilk 4, followed by mixing by agitation for about thirty minutes, and further followed by standing for about ninety minutes.
Producing the konjac product 10 by practicing a producing method 1A, comprising such a mixing process as 5A, will provide an action effect similar to that of the first preferred embodiment to practice the present invention.

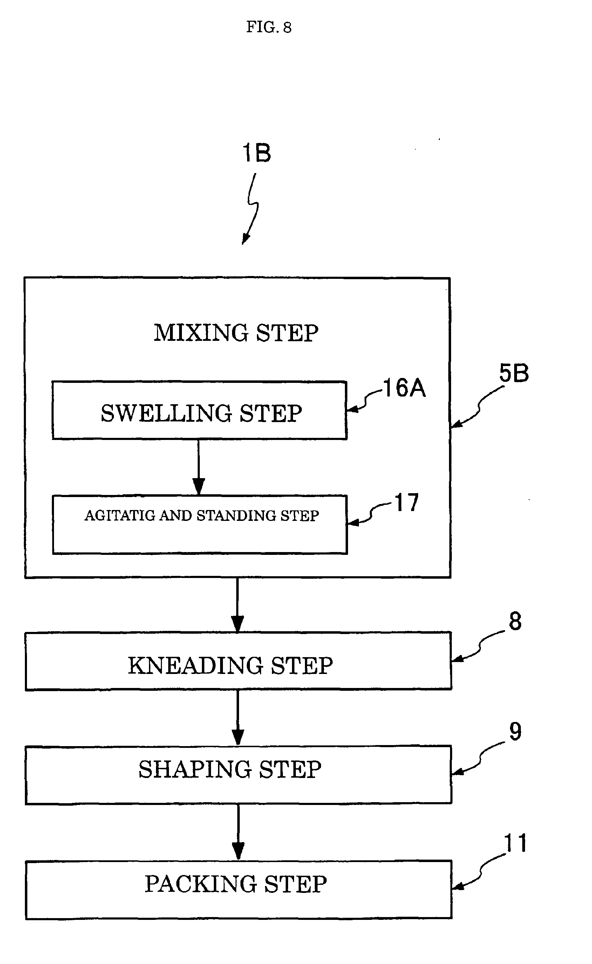

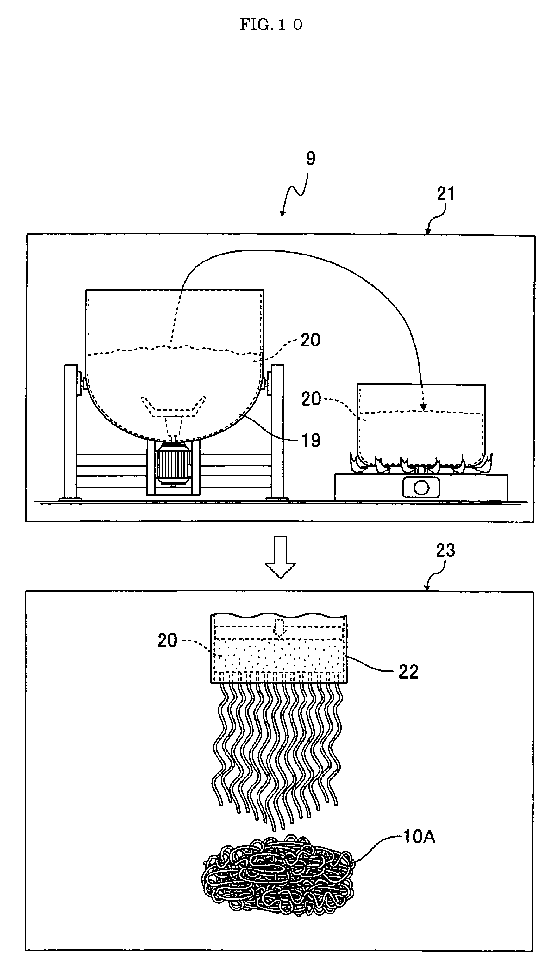

In the third embodiment to practice the present invention as illustrated in Fig. 8 and Fig.10, a principal difference from the above-mentioned the first preferred embodiment to practice the present invention is that a mixing process 5B, using a swelling process 16A, is practiced, wherein the processed water 3 is added with the konjac flour 2 and rice flour 24 which is primarily prepared from brown rice flour of between 0.007 and 0.04 weight percent and between 1µm and 50µm in size, followed by agitation, and further followed by standing for a specified amount of time until the konjac flour 2 and the rice flour 24 are swollen enough.
Producing the konjac product 10 by practicing a producing method 1B, comprising such a mixing process as 5B, will provide an action effect similar to that of the first preferred embodiment to practice the present invention. Furthermore, because of rice flour put in the mixing process 5B, processing the konjac product 10A in the shape-processing process 9 into noodle shape will make ramen noodle to eat.

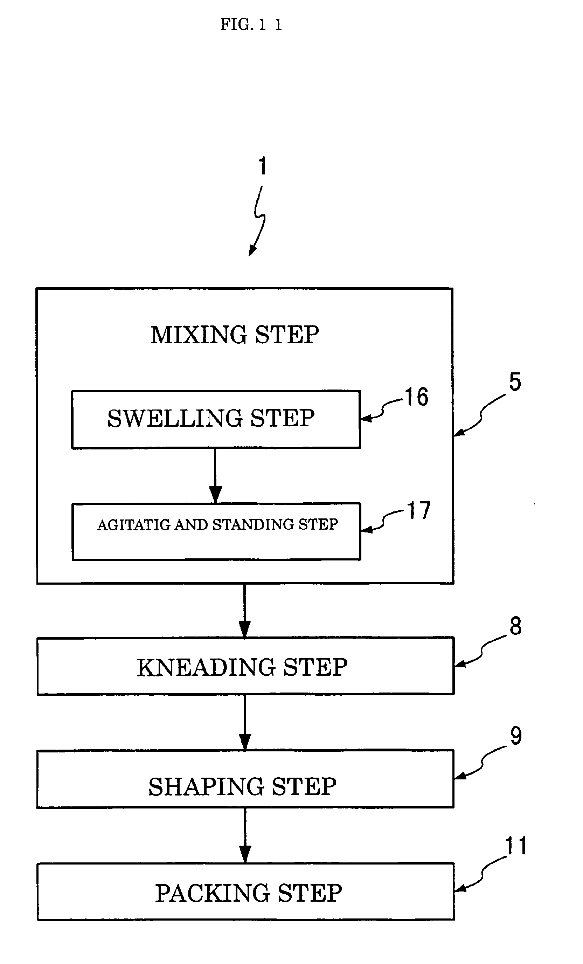

In the fourth embodiment to practice the present invention as illustrated in Fig. 11 and Fig. 13, principal differences from the above-mentioned the first preferred embodiment to practice the present invention are that: a mixing process 5C is practiced, using mineral water 3A, wherein mineral liquid 25, of which principal component is divalent iron, is mixed with the drinking water 12; and a kneading process 8A is practiced, wherein the coagulant agent 7 is mixed with the mineral liquid 25 of which principal component is divalent iron.
Practicing a "producing method of konjac product" 1C, comprising such the mixing process 5C and the kneading process 8A, will provide an action effect similar to that of the first preferred embodiment to practice the present invention.

Each of the embodiments to practice the present invention explains about a mixing process by using the processed water 3 or mineral water 3A.
However, the present invention is not limited to the above embodiments, but can also be practiced using drinking water. In such a case, to get rid of the konjac smell, by adding the mineral liquid 25, of which principal component is divalent iron, or the amino acids 14, a konjac product similar to each embodiment to practice the present invention can be produced.

### INDUSTRIAL APPLICABILITY

The present invention is applicable in the industry of producing konjac product.

## Claims

1. A producing method of konjac product, which is **characterized in that** it includes: a mixing process, wherein a specified amount of water or processed water and soymilk prepared from soybean flour of from 1µm to 50 µm in size are added to konjac flour and mixed by agitation then allowed to stand for a specified amount of time; a kneading process, which comes after the mixing process, wherein a specified amount of coagulant agent is added to the mixture followed by kneading; and a shaping process, which comes after the kneading process, wherein the resulting kneaded mixture is heated and molded into a desired shape.

2. The producing method of konjac product, which is **characterized in that** it includes: a mixing process, wherein a specified amount of water or processed water and soymilk prepared from soybean flour of from 1 µm to 50 µm in size and rice flour are added to konjac flour and mixed by agitation then allowed to stand for a specified amount of time; the kneading process, which comes after the mixing process, wherein a specified amount of coagulant agent is added to the mixture followed by kneading; and the shaping process, which comes after the kneading process, wherein the resulting kneaded mixture is heated and molded into a desired shape

3. The producing method of konjac product as described in either claim 1 or 2, which is **characterized in that**, in the mixing process, konjac flour is immersed in water or processed water until it swells, then soymilk is added to it and mixed by agitation.

4. The producing method of konjac product as described in either claim 1, 2 or 3, which is **characterized in that** processed water to be used in the mixing process is that of mixed with a specified amount of either one of divalent-iron-based mineral water, chitosan, amino acids, or pigment carotene.
